(19) Europäisches Patentamt

European Patent Office

Office européen des brevets

(11) **EP 1 188 920 A2**

(12) **EUROPEAN PATENT APPLICATION**

(43) Date of publication:
**20.03.2002 Bulletin 2002/12**

(51) Int Cl.⁷: **F02M 61/18**, F02B 75/02,
F02B 31/08, F02B 23/10

(21) Application number: **01121712.2**

(22) Date of filing: **17.09.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **18.09.2000 JP 2000286854**

(71) Applicant: **Hitachi, Ltd.**
**Chiyoda-ku, Tokyo 101-8010 (JP)**

(72) Inventors:
• **Okamoto, Yoshio**
**Higashiibaraki-gun, Ibaraki 319-0102 (JP)**
• **Miyajima, Ayumu**
**Narita-shi, Chiba 286-0025 (JP)**
• **Kadomukai, Yuzo**
**Ishioka-shi, Ibaraki 315-0035 (JP)**

• **Abe, Motoyuki**
**Niihari-gun, Ibaraki 315-0054 (JP)**
• **Togashi, Shigenori**
**Abiko-shi, Chiba 270-1165 (JP)**
• **Kubo, Hiromasa**
**Yokohama-shi, Kanagawa 244-0816 (JP)**
• **Fujii, Hiroshi**
**Tokyo 140-0002 (JP)**
• **Ishikawa, Toru**
**Kitaibaraki-shi, Ibaraki 319-1702 (JP)**
• **Nogi, Toshiharu**
**Hitachinaka-shi, Ibaraki 312-0003 (JP)**

(74) Representative: **Beetz & Partner Patentanwälte**
**Steinsdorfstrasse 10**
**80538 München (DE)**

(54) **Internal combustion engine**

(57) The invention relates to an internal combustion engine in which a fuel spray is directed toward an ignition plug (700). To a L shape fuel injection hole outlet portion of a swirl type fuel injector L shape cut out is provided and the fuel spray (100) is formed with a deflection fuel spray (100) which has a strong swirl component and can inject with much quantity. Accordingly, a reduction in the discharge HC amount and the improvement in the fuel consumption can be attained.

## FIG. 2(a)

EP 1 188 920 A2

# FIG. 2(b)

## Description

Background of the Invention:

<Technical Field>

The present invention relates to a fuel injector for supplying directly a fuel in to a cylinder and an internal combustion engine installed with the fuel injector and in particularly relates to a technique about this fuel injector.

<Prior Art>

In an internal combustion engine in which a fuel is injected directly into a cylinder, a stratification combustion system in which a thick air-fuel mixture is gathered to a side of an ignition plug and a surrounding portion of the ignition plug is formed thin has realized and an improvement in a fuel consumption has obtained.

As the above stated internal combustion engine, there is a technique shown in Japanese application patent laid-open publication No. Hei 6-81651. In this conventional technique, a tumble flow is formed in a cylinder and an injected fuel is collided with a piston and is guided by a wall of a cavity portion of the piston and using the tumble the fuel is supported and is supplied to an ignition plug.

Further, in Japanese application patent laid-open publication No. Hei 6-81656, a tumble is formed in a cylinder and to two directions which are an ignition plug direction from a first fuel injection port of a fuel injector and an ignition plug direction from to a second fuel injection port to an ignition plug direction (through immediately under an intake valve and to aim a vicinity immediately under of an exhaust valve and a slight slant lower direction against to a cylinder direction) the fuel is injected and supplied.

In the above stated conventional techniques, there is not necessary to take fully the consideration about a fuel adhesion to a wall face of the piston and a wall face of the cylinder or to a cylinder head, since the fuel adhesion generates to the piston, etc., it is not preferable to reduce a discharge HC (an unburned hydrocarbon) according to an incomplete combustion of the adhered fuel.

A characteristic of a fuel spray injected by the fuel injector and an intake air tumble relate to a combustion characteristic of the internal combustion engine. As to the characteristic of the fuel spray, firstly it relates to a fuel spray shape and this becomes factors of a spread angle of the fuel spray and a reach distance.

Secondary, it relates to a fuel spray particle diameter and it is necessary to improve an uniformity performance of a particle distribution by lessening a number of large particles of the fuel spray as possible. Thirdly, it relates to a fuel spray structure and it is necessary to form properly a spacious distribution of the fuel particles to be fuel sprayed.

On the other hand, the combustion characteristic of the internal combustion engine, firstly to improve an ignition performance it is necessary to made much fuel particle distribution in a surrounding portion of an ignition means and to heighten a distribution of an air-fuel mixture of a combustible concentration and also stay in a long period the air-fuel mixture. Accordingly, an enlargement of the combustion stability range can be attained.

Secondary, the fuel particle distribution to the piston direction is made small and the fuel adhesion is restrained, accordingly the reduction in the unburned gas components (HC, CO) of the combustion can be realized. Thirdly, to secure the combustion stability characteristic in a wide region from a low rotation of an engine rotation number (an engine speed) to a high rotation, it is unnecessary change the fuel spray shape according to a pressure change in the cylinder.

Because, since a geometric position between the fuel injector and the ignition means is fixed, to supply always to the fuel spray having a suitable concentration to the ignition means, it is important to make the spread to the fuel spray at constant.

In other words, in the fuel spray which is injected from the conventional fuel injector (for example, an axial symmetric hollow shape fuel spray obtained by a straight fuel injection port), the fuel spray spreads when the cylinder-in pressure is low, and when the cylinder-in pressure increases it has a decay in which the fuel spray is crashed and becomes narrow.

In this case, making the cylinder-in pressure to the comparative high condition as the standard, when the arrangement between the fuel injector and the ignition means is determined, during the cylinder-in pressure is low, to a cylinder upper face and a cylinder side face of the cylinder, the fuel adheres easily to a piston head.

On the other hand, making the cylinder-in pressure to the comparative low condition as the standard, when the cylinder-in pressure becomes high, there is a decay in which the fuel spray for suiting to the combustion hardly to reach to the ignition means.

Summary of the Invention:

An object of the present invention is to provide an internal combustion engine wherein a good ignition performance of the internal combustion engine can be obtained.

Another object of the present invention is to provide an internal combustion engine wherein an enlargement of a combustion stability range can be improved.

A further object of the present invention is to provide an internal combustion engine wherein a discharge amount of the unburned gas components of a combustion can be reduced.

According to the present invention, in an internal combustion engine comprising a cylinder, a piston, an intake means, an exhaust means, a fuel injector, a fuel supply means, and an ignition means, the fuel injector generates a fuel spray which has a cut out portion in which a fuel spray is thin in a peripheral direction in a lateral cross-section crossing a valve axial line of the fuel spray and injects the cut-out portion in which the fuel spray is thin toward a side of the piston, and the air taken in from the intake means is flown toward a side of the piston of the fuel spray to a side of the ignition plug.

The fuel injector has a large fuel spray angle in the side of the ignition means and a small fuel spray angle in the side of the piston. The fuel injector has an orifice plate which forms a fuel injection hole for penetrating the orifice plate in a plate thickness direction, and a fuel spray formation plate for forming the cut-out portion of the fuel spray in an outlet portion of the fuel injector.

The fuel injector generates a fuel spray which has a cut-out portion in which a fuel spray is thin in a peripheral direction in a lateral cross-section crossing a valve axial line of the fuel spray and injects at least two times the cut-out portion in which the fuel spray is thin toward a side of the piston, during one time timing.

Under a stated of a high load and a low rotation time, during an intake stroke the fuel is divided into plural times and injects from the fuel injector, and under a state of a low load and a low rotation, during a compression stroke the fuel is divided into plural times and injects from the fuel injector.

According to the present invention, much fuel particle distribution in a surrounding portion of an ignition means is formed and a distribution of an air-fuel mixture of a combustible concentration is heightened and also the air-fuel mixture is stayed at a long period, accordingly an enlargement of the combustion stability range can be attained.

Further, the fuel particle distribution to the piston direction is made small and the fuel adhesion is restrained, accordingly the unburned gas components (HC, CO) of the combustion can be reduced. For this reason, as to a fuel spray injected by a fuel injector, a fuel spray angle is made large in an ignition means side and a fuel spray angle becomes narrow in a piston side, and a fuel spray portion in the large fuel spray angle is injected to direct to an opposed side of the piston from a spark generation portion of the ignition means.

In this time, the fuel spray injected from the spark generation portion and to direct from the opposed side can be formed with a good air-fuel mixture having the combustible concentration by inducing the surrounding air.

A change of a fuel spray shape according to a change in a cylinder-in pressure is made small, a combustion stability performance in a wide region from a low rotation of an engine speed to a high rotation can be assured. For this reason, a part of a fuel spray cross-section is cut out or cut off, a pressure difference in an inner portion of the fuel spray and an outer portion of the fuel spray is made small, accordingly the fuel spray hardly can be crashed.

Brief Description of the Drawings:

Fig. 1 is a system view showing an internal combustion engine according to the present invention;
Fig. 2 is a cross-sectional view showing an internal combustion engine according to the present invention;
Fig. 3 is a cross-sectional view showing an internal combustion engine according to the prior art;
Fig. 4 is a cross-sectional view showing a positional relationship between a fuel spray and an ignition plug according to the present invention;
Fig. 5 is a view showing one example of a fuel spray measurement means;
Fig. 6 is a view showing a combustion stability range;
Fig. 7 is a view showing a relationship between a tumble strength and an exhaust air;
Fig. 8 is a cross-sectional view showing a high voltage drive fuel injector;
Fig. 9 is a longitudinal cross-sectional view showing a battery voltage drive fuel injector;
Fig. 10 is an enlarged cross-sectional view (1) showing a tip end face of a nozzle;
Fig. 11 is a view showing a relationship between a fuel swirl number and a fuel spray angle;
Fig. 12 is a view showing a fuel spray characteristic (an affect by a back pressure);
Fig. 13 is a longitudinal cross-sectional view showing a small diameter long nozzle type fuel injector;
Fig. 14 is an enlarged cross-sectional view (2) showing a tip end face of a nozzle;
Fig. 15 is a view showing a processing process of a fuel injection hole;
Fig. 16 is a process explanatory view showing a fuel injection hole;
Fig. 17 is a view showing another embodiment of a fuel injection hole plate;
Fig. 18 is a view showing another embodiment (1) of a nozzle of a fuel injector;
Fig. 19 is a view showing another embodiment (2) of a nozzle of a fuel injector;
Fig. 20 is a view showing another embodiment (3) of a nozzle of a fuel injector;
Fig. 21 is a cross-sectional view (2) of an internal combustion engine;
Fig. 22 is a cross-sectional view (3) of an internal combustion engine;
Fig. 23 is a cross-sectional view (4) of an internal combustion engine;
Fig. 24 is a view showing a constitution of a drive circuit; and

Fig. 25 is a view showing a combustion stability range (2).

Detailed Description of the Invention:

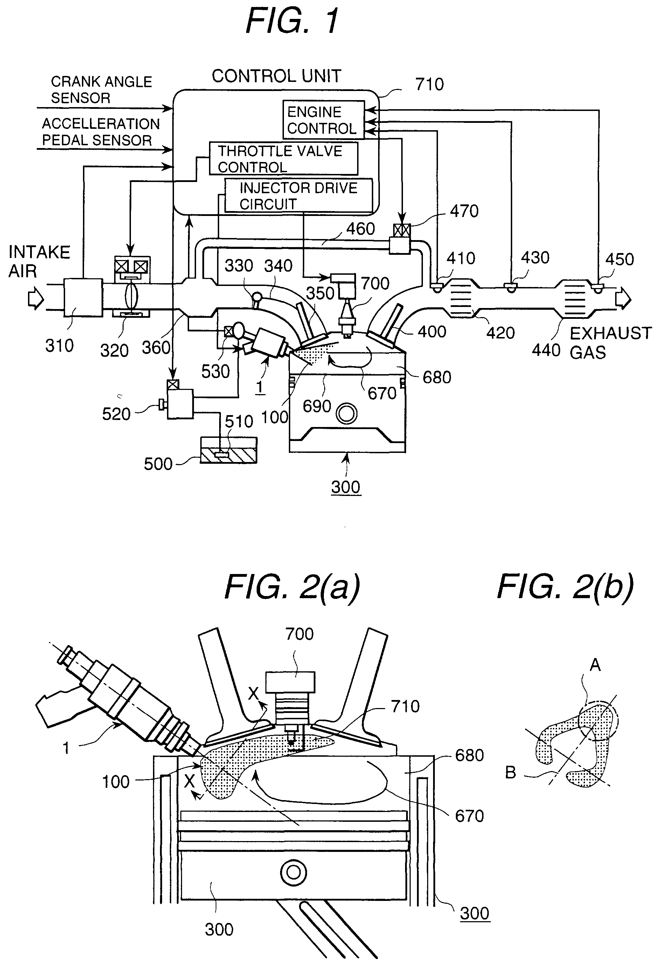

One embodiment of an internal combustion engine having a fuel injector according to the present invention will be explained referring to from Fig. 1 to Fig. 7.

Further, in the explanation in hereinafter, a condition wherein a cylinder is arranged to direct for a center axis of a cylinder of an internal combustion engine, in other words a movement direction of a piston will be explained, however the arrangement of the cylinder is not limited to this direction.

Fig. 1 shows a schematic view of a system of an internal combustion engine on which a fuel injector 1 is mounted.

An intake air system comprises an air flow sensor 310 for measuring an intake air amount, an electronic controlled throttle 320 for controlling the air amount, an air fluidity control valve 330 for generating a tumble in a cylinder 680, a partition plate 340 (this is called, a two stages port) for dividing a downstream passage of the air fluidity control valve 330, and an intake valve 350.

On the other hand, an exhaust air system is installed successively in a downstream of an exhaust valve 400 and comprises an air-fuel ratio sensor 410, a three way catalyst 420, an exhaust air temperature sensor 430, NOx catalyst 440, and an oxygen concentration sensor 450.

Further, from an upstream of the air-fuel ratio sensor 410 to an intake pipe collector 360 a passage 460 for circulating a part of an exhaust gas of the combustion gas is provided and restrains a discharge amount of NOx according to a recirculation of the exhaust gas. In a midway of this passage 460, an EGR valve 470 for controlling a circulation amount of the exhaust gas is provided.

A fuel system comprises a low pressure feed pump 510 for sucking up a fuel from a fuel tank 500, a compact type high pressure pump 520 for pressuring the low pressure fuel at once and for supplying the fuel to a fuel injector 1, and a fuel sensor 530 for measuring a fuel temperature.

A piston 690 provided in an internal combustion engine 300 has a flat shape having no cavity, and a swirl flow 670 in a cylinder 680 is a tumble flow 670 which flows into the intake valve 350 and directs for the exhaust valve 400 and a piston 690. The fuel injector 1 is provided to a wall under the intake valve 350 with an angle having about 40 degrees from a horizontal plane. A fuel spray 100 is a deflection fuel spray having a thick fuel spray which has a wide spread angle in a direction of an ignition plug 700.

A method for forming the fuel spray will be explained in a latter portion.

A reference numeral 210 is a control unit 710, this control unit 710 sends signals to the electronic controlled throttle 320, the fuel injector 1, EGR valve 470, etc. under a basis of the operation information of a crank angle being an operation information of the internal combustion engine, an acceleration pedal sensor, the air-fuel sensor 310, the fuel temperature sensor 520 and various kinds sensors in the exhaust air system, and the control unit 710 controls suitably the combustion of the internal combustion engine.

With respect to a combustion control method, with a general classification there are two methods which are a stratification combustion and a homogeneous combustion.

The stratification combustion is a combustion method in which under a condition in which a pressure in the cylinder 680 during a last half of a compression stroke is raised the fuel is injected and a combustible air-fuel mixture is gathered in a vicinity of the ignition plug 700 and a fuel spray is stratified and ignited.

Since the fuel spray is stratified, the combustion is carried out under the thin air-fuel ratio having about 40 degree in the cylinder 680, accordingly the fuel consumption can be improved.

The homogenous combustion is a combustion method after the fuel is mixed homogeneously during an intake stroke the ignition is carried out. Since the fuel is injected to form the air-fuel ratio to have a stoichiometric air-fuel ratio as a whole cylinder 680, in comparison with the that of the stratification lean burn, a high output operation can be carried out.

Fig. 2 is an enlargement view of an internal combustion engine 300, the fuel spray 100 is adopted to a flat piston engine and a relation between the tumble 670 is shown. The tumble flow is introduced into an interior portion of the fuel spray 100.

The fuel spray 100 (A in figure) having the strong swirl force and injected to direct for the ignition plug direction or a surrounding portion of the ignition plug 700 can reach to the ignition plug 700 without the support of the tumble 670 but according to the tumble 670 the reach to the ignition plug 700 is supported and riding on the tumble 670 the fuel spray 100 can be transported to the ignition plug 700.

Further, as to the fuel spray 100 injected toward the piston 690 direction, the tumble 670 becomes a little as the resistance and the force for directing toward the piston 690 is restrained and since the reach to the piston 690 of the fuel spray 100 is obstructed, the fuel adhesion can be reduced.

Further, in characteristically, a part of the fuel spray having the narrow angle and the wide spread in the piston direction 690 is cut out or cut off, the entering of the air to the interior portion of the fuel spray 100 can be promoted.

Accordingly, the force for directing to the piston 690 is restrained, and the reach to the piston 690 is obstructed, then the fuel adhesion can be reduced.

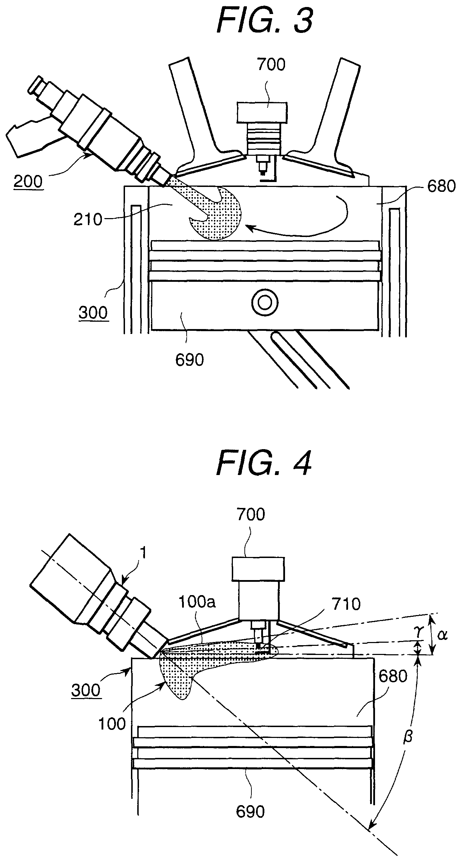

Fig. 3 is a view in which a hollow cone shape fuel spray obtained by a conventional fuel injector 200 having a straight fuel injection port is injected when the pressure in the cylinder 680 is raised.

In this case, the fuel spray is crashed and a compact fuel spray 210 having a narrow fuel spray angle is formed. When this fuel spray is collided with the cavity of the piston and stratified, there is a merit in which the fuel spray is received in the cavity of the piston and stratified easily.

However, in a flat type piston, as shown in figure, since the fuel spray collides with a normal tumble and interfered, the stratification performance is difficult. Further, since a combustible air-fuel mixture is hardly formed in the surrounding portion of the ignition plug 700, there are the indecencies that a range in which the spark is carried out stable becomes narrow and the combustion stability range becomes narrow.

Fig. 4 is a view showing a date relating to an installation layout. Differing to the kinds of the internal combustion engine 300, an installing angle $\beta$ of the fuel injector 1 is a range of 20-40 degrees. A spark generating portion 710 of the ignition plug 700 is installed with $0 - \gamma^{\circ}$ (about 5 degrees) degrees against a horizontal line (a direction for crossing in a right angle the movement direction of the piston) drawn from a center of the fuel injection port of the fuel injector 1.

An angle formed by an outer edge portion 100a of the deflection fuel spray 100 injected from the fuel injector 1 and said above stated horizontal line, namely an angle $\alpha$ in the ignition plug direction 700 is set lower than 10 degrees. A sum of these $\alpha$ and $\beta$ is named as a deflection angle.

According to this embodiment, the fuel spray angle injected from the fuel injector 1 is large in the ignition plug 700 side and the fuel spray angle is narrow, and further the fuel spray portion in the large fuel spray angle side is injected to direct for an opposite side to the piston 690 from the spark generation portion 710.

The fuel spray injected from the spark generation portion 710 to direct the opposite side to the piston 690 induces the surrounding air and accordingly the air-fuel mixture having a good combustible concentration can be formed to the spark generation portion 710.

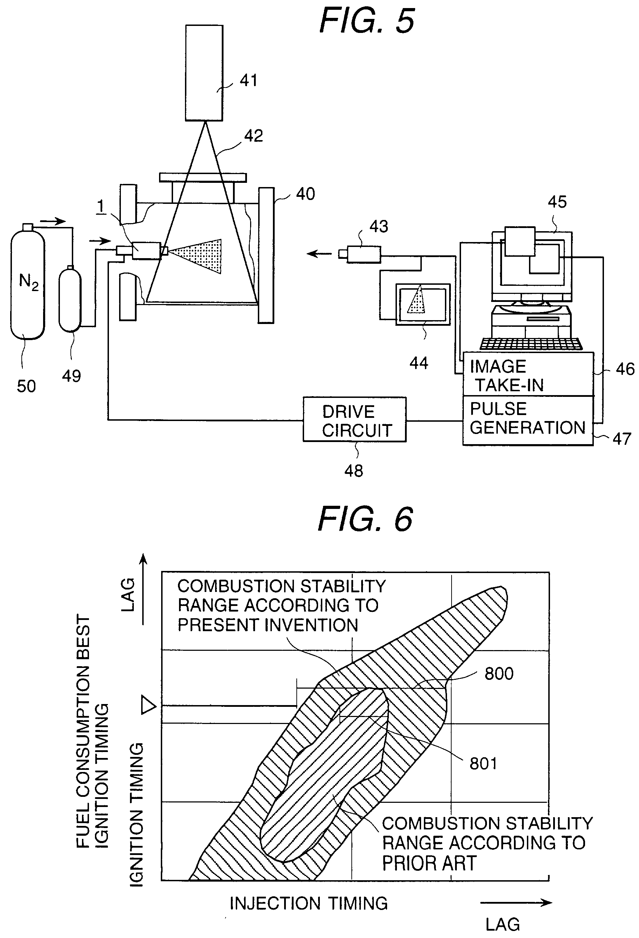

Fig. 5 shows a measurement apparatus of the above stated fuel spray. A reference numeral 40 indicates a cylindrical shape fuel spray vessel and three side faces thereof optical glasses are arranged and at one side face the fuel injector 1 is installed. A laser irradiation means 41 generates a seat light 42 by a slit which is provided in a light generation portion and since the seat light is rotated and radiates to a longitudinal and lateral cross-section direction of the fuel spray.

Further, two side faces a photography use camera 43 in which an adjustment in a zoom direction and a left and right direction is capable to carry out is provided and according to a monitor 44, then the fuel spray can be observed. Further, a reference numeral 45 indicates a personal micro-processor and this personal micro-processor 45 comprises an image take-in means 46 and a pulse generation portion 47 for giving an opening command to the.fuel injector 1.

Further, a reference numeral 48 indicates a drive circuit and a reference numeral 49 is a fuel tank which is pressurized and adjusted according to $N_2$ bomb 50. During the experimentation, a liquid having the characteristic resembled to the gasoline is used as alternatives. A pressure in the vessel can be made under a reduced pressure or under an increased pressure according to a vacuum pump or the $N_2$ bomb.

A main operating procedure is that a setting of an opening valve command to the fuel injector 100 → a setting of a timing of irradiating a laser seat → a setting of the laser seat position → a drive of an image take-in soft → an output of the opening valve command → an image take-in → an image preservation. Using this measurement apparatus, a fuel spray direction (a deflection angle) of the deflection angle injected from the fuel injector 1 and a reach distance (a penetration) can be set most suitable to the various kinds of the internal combustion engines.

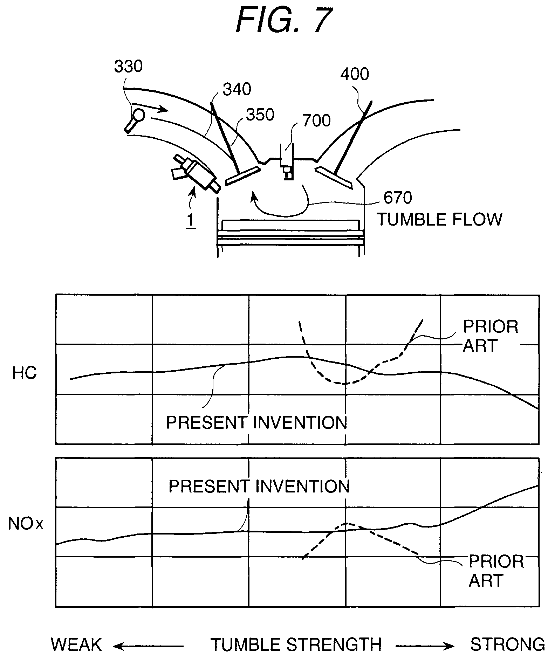

Each of Fig. 6 and Fig. 7 shows one example of the above stated results.

Fig. 6 shows a combustion stability range in a case in which an injection timing is shown in a horizontal axis and an ignition timing is shown in a vertical axis. In the conventional fuel spray or the conventional internal combustion engine, a combustion stability range 801 in the ignition timing where the fuel consumption becomes best is very narrow. For this reason, responding to the conditions about an individual machine difference in the fuel injectors and the time lapse change, it is difficult to stabilize the combustion.

Further, when the rotation number becomes high, it is necessary to take large a crank angle from the injection to the ignition. It is considered that by the raise of the rotation number the move of the piston becomes rapid and in addition to this by the raise of the atmospheric pressure since the fuel spray withers, the speed of the move of the piston becomes late.

In this embodiment, since the deflection fuel spray directed for the ignition plug direction is not changed very so according to the raise of the atmospheric pressure, the conventional problems can be solved, since the combustion stability range 800 becomes wide, the conditions of the individual machine difference change a little, it is possible to carry out the stability combustion. Further, it is possible to carry out the stability combustion in regardless of the rotation number of the internal combustion engine.

Fig. 7 shows an affect of the tumble fluidization in which the strength of the tumble 760 generated in the cylinder is shown in a horizontal axis and HC (the unburned hydrocarbon) and NOx are shown in the vertical axis. The strength of the tumble flow 670 is adjusted by an opening area of a passage in a lower side of the partition plate 340 according to an opening degree of an air fluidization control valve 330.

In the conventional fuel spray and in the conventional internal combustion engine, to the ignition plug 700 to introduce the combustible air-fuel mixture, a cavity is provided to the piston the fuel spray is guided, the pressure is raised and the withered fuel spray is lifted up by the tumble.

For this reason, since it is necessary to have the desirable value of the tumble strength or some degree large value, in the narrow range it is impossible to obtain a region having a good exhaust performance. Since the fuel spray is confined in the cavity of the piston, the fuel is adhered to a wall face of the piston and the after-burning combustion is occurred and then the region becomes narrow.

In this embodiment, since the deflection fuel spray directed for the ignition plug direction is not changed very so according to the raise of the atmospheric pressure, the conventional problems can be solved, accordingly the exhaust performance having the good range exists widely.

In particular, even the tumble flow 670 changes, since the exhaust performance is not controlled largely, the effects for simplifying the intake air control system can be obtained, namely the partition plate can be abolished and the air fluidization control valve 330 is limited to carry out only the "ON-OFF" control.

Next, the embodiments for carrying out of the various kinds of the fuel injectors for realizing the defection fuel spray will be explained.

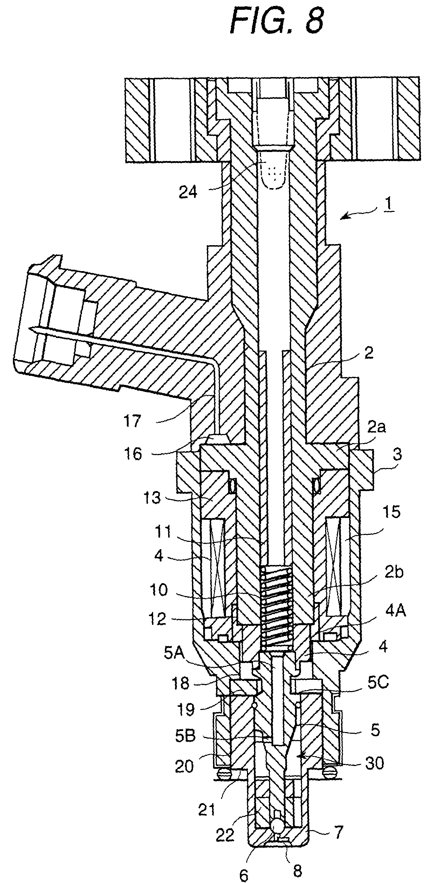

Fig. 8 shows a longitudinal cross-sectional view of an electromagnetic type fuel injector 1 and using this figure a construction and an operation of the electromagnetic type fuel injector 1 will be explained.

In the electromagnetic type fuel injector 1, according to an ON-OFF signal of a duty executed by an control unit an opening and a closing of a seat portion of the fuel injector is carried out and then the fuel is injected. A magnetic circuit comprises a york 3, a core 2 having a shield body portion 2a for closing an opening end of the york 3 and a pillar shape portion 2b for extending toward a center portion of the york 3, and an anchor 4 for facing to the core 2 by spacing an air gap.

In a center of the pillar shape portion 2b of the core 2, a valve body 30 comprising the anchor 4 and a rod 5 and a ball 6 is inserted into to push under a pressure to a seat face 9 in an upstream side of a fuel injection hole 8 provided in a nozzle member 7 and for permitting a passage of the fuel and as an elastic member a hole 4A for holding a spring member 10 being as an elastic body member is provided. In this time, the valve body 30 is driven as one body with the anchor 4, the rod 5 and the ball 6 and between a valve seat the valve body 30 for opening and closing the fuel passage is constituted.

Further, an upper end of the spring member 10 is contacted to a lower end of a spring member adjuster 11 which is inserted in a center of the core 2 to adjust a set load. In a gap portion faced to a side of the pillar shape portion 2b of the core 2 and a side of the valve body 30 of the york 3, to prevent the flow-out of the fuel in the side of a coil 14, a seal ring 12 fixed mechanically to between the both is provided.

The coil 14 for exciting the magnetic circuit is wound to a bobbin 13 and an outer periphery thereof is molded by a plastic body member. A terminal 17 of a coil assembly body 15 constituted by these components is inserted to a hole which is provided to a brim portion 2a of the core 2. The terminal 17 is combined with a terminal of the control unit not shown in figure.

To the york 3, a plunger receiving portion 18 for receiving the valve body 30 is opened, and further a nozzle receiving portion 20 having a large diameter of the plunger receiving portion 18 and for receiving a stopper 19 and a nozzle portion member 7 is penetrated through until a tip end of the york 3.

The valve body 30 comprises the magnetic material anchor 4, the rod 5 in which a tip thereof is formed integrally with the anchor 4, and the ball 6 for joined to a tip end portion of the rod 5 and a side of the anchor 4 of the rod 5 a cavity portion 5A for permitting the passing-through of the fuel is provided. To the cavity portion 5A, a flow-out port 5B of the fuel is provided.

Further, to the valve body 30 since an outer periphery of the anchor 4 contacts to the seal ring 12, a move in the axial direction is guided and also a vicinity of the tip end of the rod 5 to which the ball 6 is joined is guided to an inner peripheral face 23 of the fuel swirl element 22 which is inserted into an inner wall 21 of a hollow portion of the nozzle member 7.

To the nozzle member 7, succession to the fuel swirl element 22 for guiding the vicinity of the end portion of the rod 5 to which the ball 6 is joined the seat face 9 on which the ball 6 is seated is formed. To a central portion of the downstream of the seat face 9, a fuel injection hole 8 for permitting the passing-through of the fuel is provided.

Further, the stroke (the movement amount to an axial upper portion in Fig. 1) of the valve body 30 is set according to a gap between a receiving face 5C of a neck portion of the rod 5 and the stopper 19. Further, a filter 24 is provided to prevent the entering of the dusts and the foreign matters in the fuel and the piping toward in a side of the valve seat to between the ball 6 and the seat face 9.

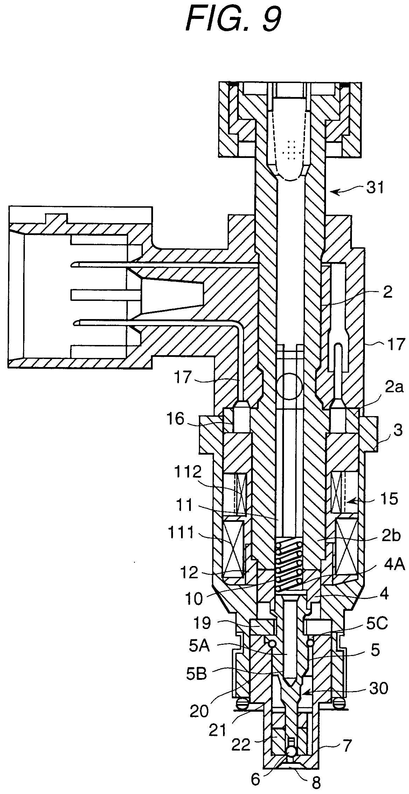

Fig. 9 shows a fuel injector 31 having the two coils comprised of a control coil 111 and a hold coil 112 as a means for generating a drive force of the valve body 30. Other constructions except for the coil portion have the same function or the similar function of the fuel injector shown in Fig. 9. The characteristic of this fuel injector 31 is that it is driven by a battery voltage.

Further, according to the control coil 11, since a responsibility thereof can be heightened and according to the hold coil 112 since a reduction of a holding electric power is improved, the fuel can be injected to a low injection amount region with a good accuracy performance and further it has a characteristic in which a consumption electric power can be lessened.

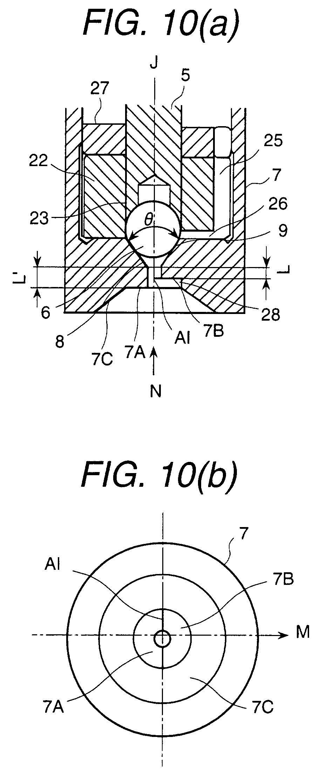

Next, referring to Fig. 10, the nozzle member 7 having a L shape cut-out face structure (a L shape cut-off face structure) of this embodiment will be explained. Fig. 10 shows an enlargement view of the electro-magnetic type fuel injector 1 or 31 and the nozzle member 7 portion and Fig. 10(a) is a longitudinal cross-sectional view of the nozzle 7 portion and Fig. 10(b) is a plane view taken from an arrow mark N direction of the nozzle member 7 portion.

In the fuel injection hole 8, a center of the fuel injection hole 8 is coincided with an axial line J (a valve axial center) of the valve body 5 and also a wall face of the fuel injection hole 8 is formed in parallel to the axial line J (the valve axial center) of the valve body 5 and is formed with a largeness of a diameter of do.

Further, the seat face 9 of the nozzle member 7 is formed with a seat angle of θ. In an outlet portion of the fuel injection hole 8, a L type cut-out portion (a L shape 28 cut-off portion) is constituted with faces 7A and 7B which are orthogonal with the axial line J and a face A1 with a substantially parallel to the axial line J and the face 7B and the face A1.

The L type cut-off portion 28 is constituted by a means for restricting a force which directs for a crossing direction of the valve shaft of the fuel being injected. A taper face 7C succession to the face 7A is formed and this face 7C can absorb a shock sound of the valve body 5 and has a function for improving a rigidity performance.

In the above stated structure, the "cut-off" in the cutoff face A1 etc. is limited to the processing method but it means the shape in which a part thereof is cut out, as a result it is not limited to a subject which is processed by cutting-off actually using the cutting processing etc.. Namely, it can employ a press processing (an elastic processing) using a die member or a processing using a forging processing. Further, the ball 6 is unnecessary to limit to a sphere shape, but it may employ a cone shape needle valve.

Further, in Fig. 10, in the fuel swirl element 22, an axial direction groove 25 in which an outer peripheral portion of the fuel swirl element 22 is formed to a flat face setting and a radial direction groove 26 are provided. In this embodiment, the axial direction groove 25 is formed with the flat face but it can be formed with other shapes such as a circular passage etc..

The above stated axial direction groove 25 and the radial direction groove 26 are the fuel passages in which the fuel is introduced from an upper portion of the fuel swirl element 22 and the fuel which has passed through the axial direction groove 25 is introduced eccentrically from an axial center in the radial direction groove 26 and the fuel is imparted the swirl and during the injection of the fuel from the fuel injection hole 8 provided on the nozzle member 7 the atomization performance in the fuel can be promoted. The fuel swirl element 22 is pressed and fixed under pressure to an inner peripheral face of the nozzle member 7.

Herein, the swirl strength (a swirl number S) imparted by the fuel swirl element 22 is requested according to a following equation.

<Formula 1>

$$S = \text{(angular movement amount) / (fuel injection axial direction movement amount) x (fuel injection hole diameter))}$$

$$= 2 \times do \times Ls / n \times ds^2 \times \cos\theta s$$

herein,

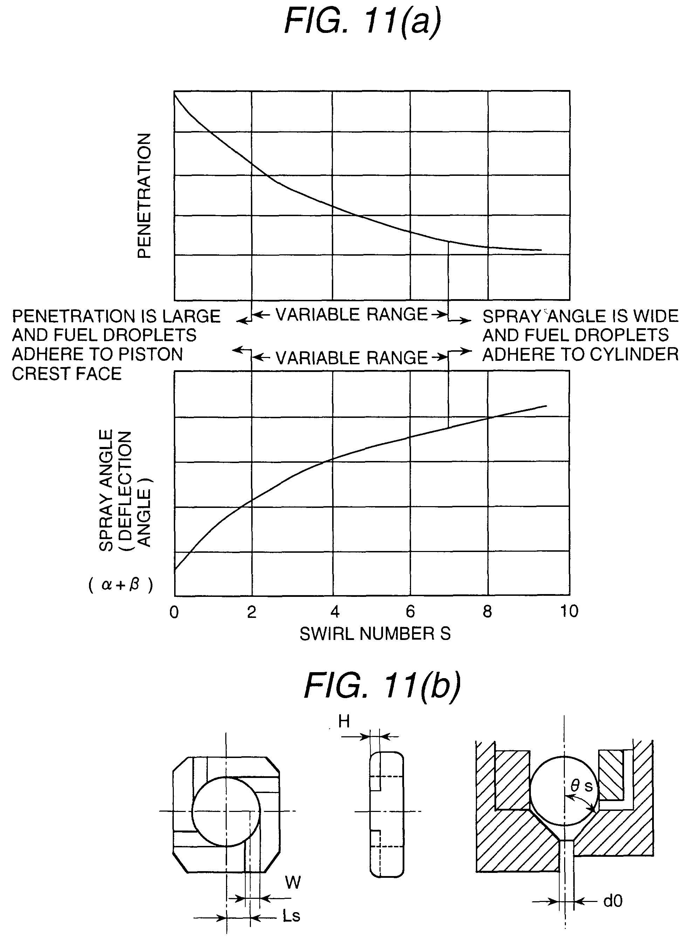

do = fuel injection hole diameter
Ls = groove eccentric amount (a distance between a valve axial center and a groove (width) center)
n = groove number
s = valve seat angle/2
ds = flow equivalent diameter expressed using a groove width W and a groove height H
= 2 x W x H / W + H (confer Fig. 11(b))

When the swirl number S is large the atomization is promoted and then the fuel spray is dispersed.

An operation of the fuel injector with the above stated construction will be explained. According to an electric ON and OFF signal imparted to the electro-magnetic coil 14, the valve body 30 is moved to an upper side and a lower side in the axial direction and an opening or a closing of a space between the ball 6 and the seat face 9 is carried out, according to these the injection control of the fuel is carried out.

When the electric signal is imparted to the coil 14, using the core 2, the yoke 3 and the anchor 4, a magnetic circuit is formed and then the anchor 4 is attracted to the side of the core 2. When the anchor 4 is moved, the ball 6 which is formed integrally with the anchor 4 is moved and the ball 6 is separated from the seat face 9 of the valve seat of the nozzle member 7 and then the fuel passage is opened in the upstream side of the fuel injection hole 8.

The fuel is flown into the interior portion of the fuel injector 1 from a filter 24 and is passed through an interior portion passage of the core 2, an outer peripheral portion of the anchor 4, a cavity portion 5A which is formed in the anchor 4 and for permitting the passing-through of the fuel, and a flow-out port 5B of the fuel and reaches to the downstream.

The fuel is passed through further a space between a stopper 19 and the rod 5, the axial direction fuel passage 25 of the fuel swirl element 22, the radial direction fuel passage 26 of the fuel swirl element 22 and is swirl-supplied to the seat portion and then the fuel is injected from the fuel injector 8 during the opening valve time.

Next, referring to Fig. 2, Fig. 4 and Fig. 10, the fuel spray structure obtained by the fuel injector according to the present embodiment will be explained.

Fig. 4 shows a schematic manner in which the fuel is directly injected into the combustion chamber (the cylinder) of the internal combustion engine.

As shown in this figure, the fuel spray which is injected from the fuel injector 1 of this embodiment is deflected in the side of the ignition plug 700 and the deflection angle is shown with $\alpha+\beta$. The correspondence with the face of the nozzle member 7 shown in Fig. 10 (b) is that a direction M shown in the figure is corresponded with the deflection direction of the fuel spray.

Further, as shown in Fig. 2(a), in the lateral cross-section, the air-fuel mixture having the combustible concentration is thick but in the side of the ignition plug 700 and in the side of the piston 690 the air-fuel mixture having the combustible concentration is not existed. Namely, in the side of the piston 690, a part of the fuel spray has a cut-out shape.

Further, as shown in Fig. 2 and Fig. 4, when the fuel injector 1 according to this embodiment is installed to the internal combustion engine 300 with the installation angle $\beta$, the air-fuel mixture stays in a surrounding portion of the ignition plug 700 which is provided on the internal combustion engine 300, and on the other hand in the piston 690 side the air-fuel mixture becomes thin.

Since the above stated fuel spray is cut-out partially in the portion 690 in which the fuel spray becomes thin, even when the pressure in the cylinder 680 is changed according to the movement of the piston 690, the pressure between the inner portion of the fuel spray and the outer portion of the fuel spray can be balanced easily, then it has the merits in which the fuel spray is hardly crushed and the shape of the fuel spray is held at constant.

In the generation of the above stated fuel spray, the fuel spray is determined suitably in accordance with the inner diameter of the cylinder of the internal combustion engine to be subjected, in other words in accordance with the capacity of the internal combustion engine and the installation angle of the fuel injector, in concretely it can set in accordance with the size of (L'-L) and the above stated swirl number S, etc..

In Fig. 11(a), the relationship between the swirl number S and the fuel spray angle (the deflection angle) and the penetration (the reach distance). When the swirl number S is small, the penetration becomes large and the fuel injector is installed to the internal combustion engine, it occurs a problem in which the fuel adheres to the crest face of the piston.

On the other hand, when the swirl number S becomes large excessively, the fuel spray angle becomes wide excessively and then it occurs a problem in which the fuel adheres to the inner wall face of the cylinder head. According to the fuel injector of this embodiment, it can generate the effective deflection fuel spray having the range of the swirl number of 2-7.

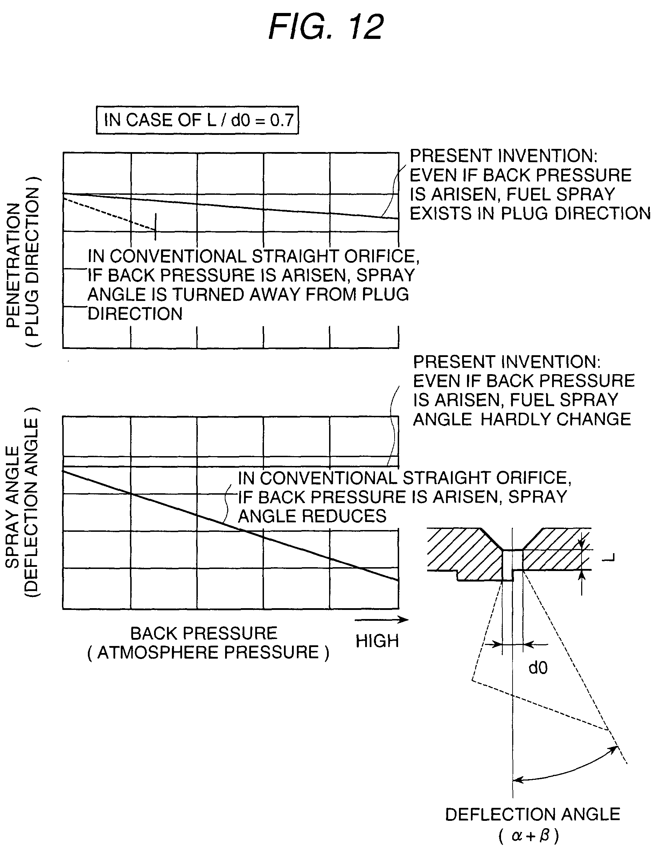

In Fig. 12, at the swirl number is 6.7 and at L/do of 0.7, the relationship between the back pressure (the atmosphere pressure) and the fuel spray angle and the penetration is shown by comparing with the fuel spray having the conventional straight fuel injection hole. In the conventional straight fuel injection hole, if the back pressure is risen, the fuel spray withers and then the fuel spray angle becomes small.

On the other hand, according to the fuel injector of this embodiment, even if the back pressure is risen, since the pressure between the inner portion of the fuel spray and the outer portion of the fuel spray is balanced and then the fuel spray angle hardly changes.

On the other hand, as to the penetration in the ignition plug direction, in the installation layout shown in Fig. 4, the comparison condition is the condition in which the fuel spray exists in the ignition plug direction. In the conventional fuel injector having the straight fuel injection hole, if the back pressure is risen, it can not suit because the fuel spray is turned away from the ignition plug direction.

However, according to the fuel injector of this embodiment, the fuel spray exists in the ignition plug direction, although it changes a little according to the increase of the atmosphere density. Namely, according to this embodiment, since the combustible air-fuel mixture can be existed stable in the surrounding portion of the ignition plug, accordingly the combustion stability range can be enlarged.

Next, an adoption example to another fuel injector will be explained.

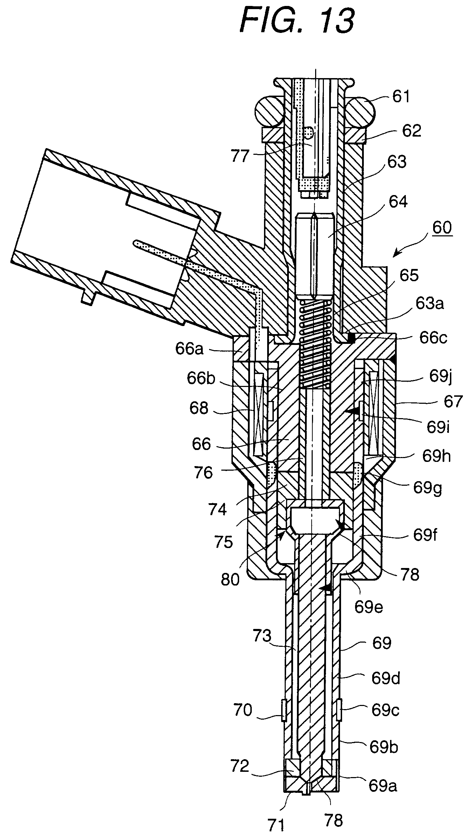

From Fig. 13 to Fig. 18, it relates to a fuel injector in which a nozzle portion is formed thin and long. When this fuel injector is mounted on the internal combustion engine, there is a saving space, since the fuel injector can provide to not interfere another components and the cylinder head, there is a merit in which a freedom degree for installing the fuel injector can be heightened.

Further, this structure has the merit in which at least one selected from a low cost performance according to a simplification performance of the components and a low cost material utilization, a sure fuel seal, a high accuracy of the fuel injection amount characteristic, a high efficiency performance of the magnetic circuit, and a secondary fuel injection prevention etc. can be responded.

Hereinafter, the structure and the operation of the fuel injector will be explained.

Fig. 13 is a longitudinal cross-sectional view of a fuel injector 60. In this fuel injector 60, from a center to an outer shape direction a hollow shape core 66, a nozzle holder 69, a coil 68, a yoke 67 are arranged, to the nozzle holder 69 a plunger 80 having a valve body is mounted in an interior portion thereof, and this plunger 80 is forced to a side of an orifice plate 71. An outer diameter of a hollow cylindrical portion 66a of the core 66 is formed larger than an inner diameter of a thin diameter portion of the nozzle holder 69.

As to a basic operation of this fuel injector 60, when the coil 68 is applied with the electric current, the yoke 67, the core 66, an anchor 74 (a part of the plunger 80) and a portion sandwiched by the anchor 74 of the nozzle holder 69 and the core 66 form the magnetic circuit, in accordance with this magnetic circuit since the plunger 80 is attracted against a force of a return spring member 65, an opening valve operation is carried out.

Further, when the coil 66 is stopped the electric current, in accordance with the force of the return spring member 65 the plunger 80 is contacted to an orifice plate 71 and then a closing valve operation is carried out.

In this embodiment, a lower end face of the core 66 works a role of a stopper for receiving the plunger 80 during the opening valve operation time. For this reason, to the lower end face of the core 66 and an upper end face of the anchor 74 it is preferable to carry out the electrolyte plating manner such as a chrome plating.

The core 66 is comprised of a hollow cylindrical portion 66a and a hollow disc portion 66b as one body. The core 66 can be performed according to a press processing of a magnetic material (an electro-magnetic stainless) of a stainless group and a cutting processing. A diameter of the hollow cylindrical portion 66a of the core 66 is larger than an inner diameter of the thin diameter portion of the nozzle holder 69.

To communicate with a hollow portion of the hollow disc portion 66b of the core 66, a fuel connector 63 is welded. An end face of a side of the core 66 of a connector pipe 63 has an enlarged structure and a welding margin can be obtained fully. To hold the fuel seal performance this welding is carried out on one periphery of a joining boundary portion, for example portions shown with reference numerals 66a and 66c, according to a laser welding etc..

In the inner side of the fuel connector pipe 63, this pipe 63 has a step-wise difference in which a fuel filter 77 for removing the dusts etc. which are mingled with the fuel from an upstream side of the fuel passage, a spring press member 64 for regulating an initial load of the return spring member 65 are inserted and fixed. The above stated step-wise difference can be formed with a low cost according to a pipe squeeze processing.

Further, since the fuel pipe connector 63 is constituted separately with the core 66, this connector 3 can be altered with the various coupling structures. The nozzle holder 69 is made from the magnetic material of the stainless (the electro-magnetic stainless).

The pipe member has the thin and long nozzle portions (from 69a to 69d) and has a step-wise difference of the anchor/core supports (from 69f to 69j) which has the inner diameter larger than the inner diameter of the nozzle portion and is along to an outer diameter of the cylindrical portion 66a of the core 66. The nozzle holder 69 is performed integrally according to the pipe squeeze processing and can be manufactured with the low cost compared with the cutting processing.

To the lower end (69a) of the nozzle portion of the nozzle holder 69, the orifice plate 71 and the fuel swirl element 72 are provided, and they are formed with separate members.

To a cone shape cut-off portion 69c of the nozzle holder 69. A Teflon seal 70 for performing the combustion gas seal is provided. This seal 70 has a step-wise formation portion 69e for connecting the thin diameter nozzle portions (from 69a to 69d) and the anchor/core support portions (from 69f to 69j). In this embodiment, an angle to an axial direction of the step-wise formation portion 69e is substantially 90 degrees, however it is not limited to this but any angle can be employed.

The plunger 80 is constituted by a plunger rod 73, the anchor 74 and joint pipes 78 for joining the respective components. Further, between the joint pipe 78 and the anchor 74, a ring shape plate spring member 75 is sandwich-mounted. The joint pipe 78 is formed according to the pipe squeeze processing. The joint pipe 78 is inserted under pressure to the plunger rod 73 and fixed according to the laser welding manner.

Further, the joining between the joint pipe 78 and the anchor 74 is inserted under pressure to the plunger rod 73 and fixed according to the laser welding manner. The anchor 74 has a hollow structure and the plate spring member 75 is formed with the ring shape and an inner side thereof is a punching portion. Further, to the joint pipe 78, the fuel passage hole is opened. To the plate spring member 75, one end of a mass ring 76 being a cylindrical shape movable mass body is received.

The mass ring 76 is formed, for example, by a non-magnetic material of stainless material to prevent the magnetic short-circuit formed between the core 66 and the anchor 74. The mass ring 76 is positioned extending over one end of an inner periphery of the core 66 and one end of an inner periphery of the anchor 74.

A hollow hole formed in the core 66 becomes the fuel passage and to the hollow hole from the lower portion in turn the mass ring 76, a return spring member 65 are arranged. Further, in the fuel connector pipe 63, a spring pressing ember 64 for regulating an initial load of the return spring member 65 and the fuel filter 77 are provided in turn.

The mass ring 76 is intervened movably independently between the return spring member 76 and the plunger 80 in the axial direction. To compensate the independent movable move, between the mass ring 76 and the plunger 80, the plate spring member 75 is intervened and according to the plate spring member 75 the mass ring 76 is received. As stated in above, the mass ring 76 works a role to carry out a dynamic damper action for restraining a backlash operation of the plunger 80 during the closing valve operation time.

This damper action is that during the closing valve time of the plunger 80 when the plunger 80 collides with the valve seat 78 according to the force of the return spring member 65, the plunger 80 is carried out the backlash but the kinetic energy at this time is absorbed through the inertia of the mass ring 76 and an elastic deformation of the plate spring member 75 and the backlash is attenuated. This damper action can bring out an extremely action effect.

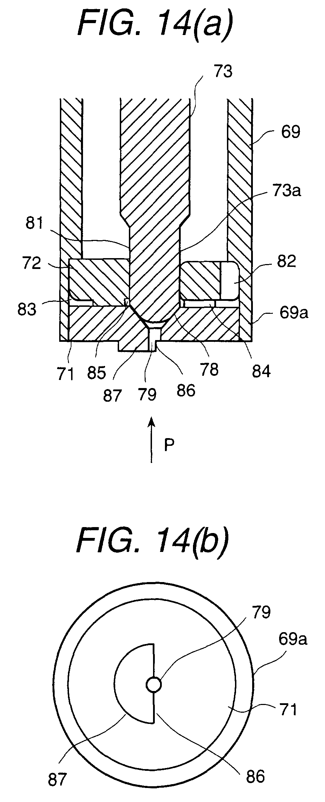

Fig. 14 is an enlargement cross-sectional view of a vicinity portion of the tip end of the nozzle holder 69 and referring to this figure the generation method and the manufacture method of the deflection fuel spray of the fuel injector according to the present invention will be explained.

To the lower end (the tip end 69a) of the nozzle portion of the nozzle holder 69, the orifice plate 71 and the fuel swirl element 72 are provided and they are constituted using separated members. The orifice plate 71, for example, is formed with a stainless group disc chip and to a center thereof the fuel injection hole (an orifice) is provided and to an upstream portion succession to this the valve seat 78 is formed.

The orifice plate 71 is installed under pressure to the tip end 69a of the nozzle holder 69. On the other hand, the fuel swirl element 72 is inserted under pressure to the tip end 69a of the nozzle holder 69 according to the space fit-into manner and is formed with a sintering alloy such as SUS 416.

This fuel swirl element 72 is a tip shape near to a substantial disc and at a center thereof a central hole (a guide) 81 for slide-guiding a tip end 73a of the plunger rod 73 is provided and further extending over from an upper face to a lower face a vertical passage 82 for guiding the fuel to the outer periphery is provided.

On the other hand, in a lower face, a ring shape step-wise difference (a flow passage) 83 is formed to the outer peripheral edge and between this ring shape passage 83 and the central hole 81, plural offset passages for forming the swirl flow of the fuel, for example from four to six, are formed. To an outlet portion of the offset passage 84, a swirl chamber 85 is formed to obtain stable the swirl flow of the fuel. Further, after the insertion under pressure of the fuel swirl element 72 by pressing the orifice plate 71, the orifice plate 71 is welded and fixed.

This welding is carried out extending over one periphery of a combined boundary portion according to the laser welding manner etc. to hold the fuel seal performance. Further, to the offset passage 84 of the fuel swirl element 72, a part (a part of the row material) of the side of the orifice plate 71 is rounded in and a rotation dent is carried out surely.

To the outlet portion of the fuel injection hole 79, a L shape cut-off portion 86 for generating the deflection fuel spray is formed. The position of the cut-off portion is provided to a portion which coincides substantially with a central position of the fuel injection hole 79. A detail formation method of the cut-off portion will be similar to that of the method explained in Fig. 10.

Further, an outlet end of the fuel injection hole 79 is constituted with a projection shape 87 and this is formed by a structure in which the rigidity performance is heightened and a shock sound when the tip end 73a of the plunger rod 73 to the valve seat can be attenuated.

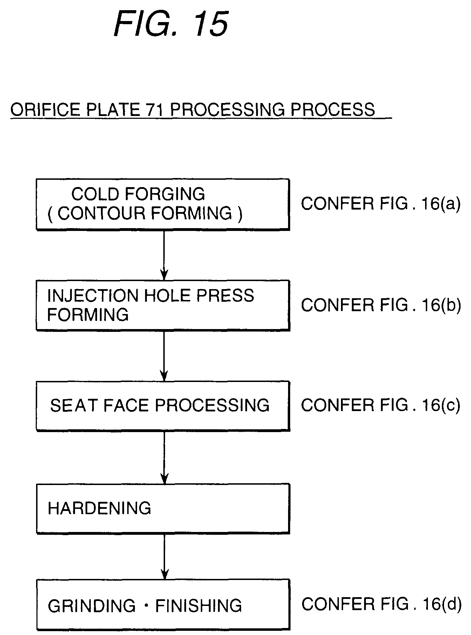

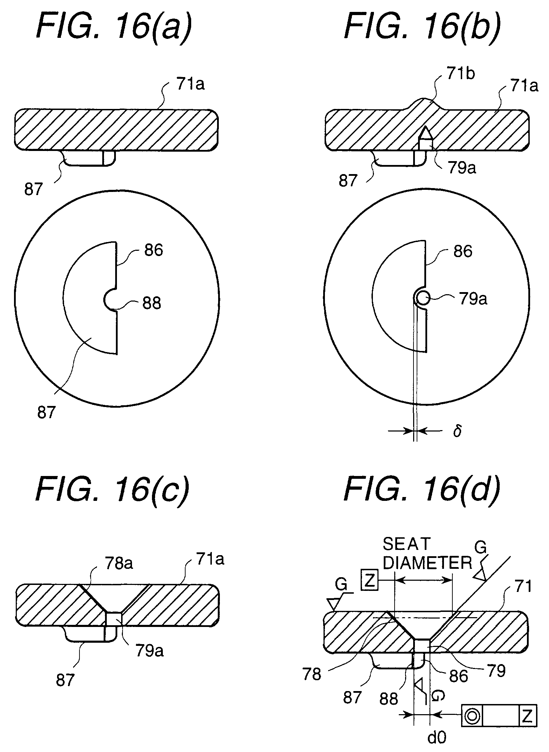

Fig. 15 and Fig. 16 show one example of forming the method of the orifice plate 71, Fig. 15 shows a processing flow-chart and Fig. 16 shows a figure after the formation through the respective processes. (a) Through a cold forging processing the outer form 71a of the orifice plate 71 is formed. In the carrying-out embodiment, a substantially concentrically semi-circular shape wall 88 is provided in a corresponding portion of the fuel injection hole formation portion and has a larger diameter than the diameter of the fuel injection hole.

(b) The fuel injection hole 79 is formed. In this case, the fuel injection hole 79 is formed concentrically through a gap $\delta$ with the above stated wall 88. Further, this fuel injection hole 79 is not punched out but formed with a voluntary depth part. As shown in figure, according to this formation, a raised portion 71 is formed.

Further, the gap $\delta$ is several 10 $\mu$m degree. (c) In a next process, the valve seat for forming a seat portion is formed a cut-off processing etc.. The processing portion is the above stated raised portion 71b and this portion is taken off. Next, after a hardening, (d) The finishing of the essential portion, for example, the seat face 78 and the fuel injection hole 79 etc. is carried out.

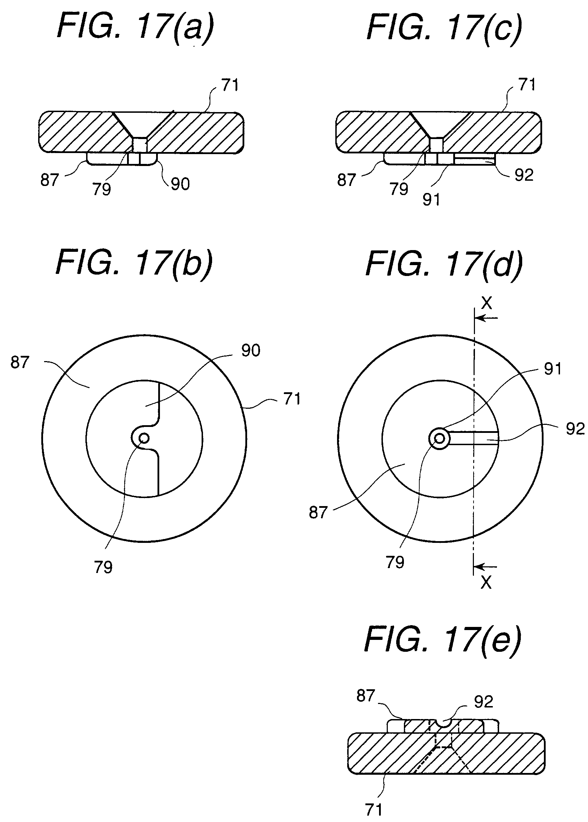

Fig. 17 shows a modified example of the orifice plate 71. The carrying-out embodiment shown in (a) and (b) is a case in which a wall face 90 for constituting a L shape cut-off face is formed longer and remote from the fuel injection hole 79. Further, the carrying-out embodiment shown in (c) and (d) is a case in which after the face wall 91 has been extended from the fuel injection hole 79 in the same axial direction and a part of the wall is removed with a recessed portion 92.

Namely, in the above stated carrying-out embodiments, since a portion for altering suitably according to the capacity of the internal combustion engine and the installation angle of the fuel injector is put together to the orifice plate 71, it can be corresponded, then an improvement of a productivity performance can be expected.

Next, another embodiment of the nozzle tip end will be explained.

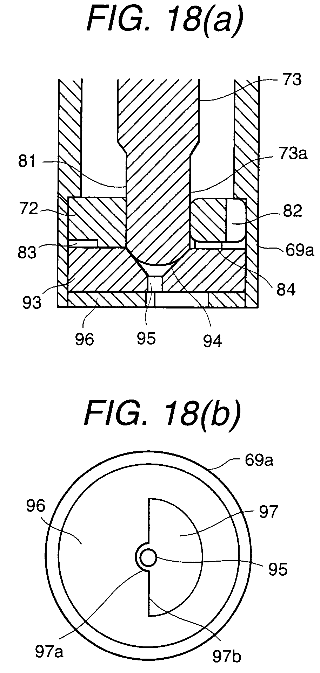

Fig. 18 shows an embodiment of a divisional construction of the orifice plate. This figure is an enlarged cross-sectional view of a vicinity portion of the tip end of the nozzle holder 69.

An orifice plate 93 according to this carrying-out embodiment is formed, for example, with a stainless group disc shape chip and at a center thereof a fuel injection hole 95 (the orifice) is provided, and to an upstream portion succession to this a valve seat 94 is formed. The orifice plate 93 is installed under pressure to the tip end 69a of the nozzle holder 69. At a lower face of the orifice plate 93, a fuel spray formation use plate 96 which corresponds to a L shape cut-off is provided.

To the fuel spray formation use plate 96, a semi-circular shape hole 97 is formed according to the punching-out etc. and a wall 97a being concentical to the fuel injection hole 95 and a wall 97b for coinciding substantially with an axial center of the fuel injection hole 95 are provided.

Further, after the insertion under pressure of the fuel swirl element 72 by pressing the orifice plate 93 and the fuel spray formation use plate 96 are welded and fixed. This welding is carried out extending over one periphery of a combined boundary portion according to the laser welding manner etc. to hold the fuel seal performance.

Further, to the offset passage 84 of the fuel swirl element 72, a part (a part of the row material) of the side of the orifice plate 93 is rounded in and a rotation dent is carried out surely. In this carrying-out embodiment, since the structures of the respective components are simplified it has a merit on the cost performance.

Further, since the thermal deformation during the welding time is not affected to the fuel injection hole 95 and the valve seat 94 which are performed with the high accuracy finishing, an assemble performance can be advantageous.

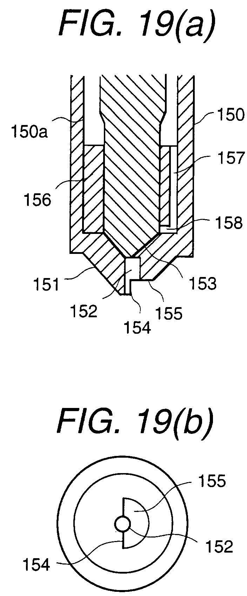

Fig. 19 shows a carrying-out embodiment in which a nozzle tip end face is adopted to a cone shape fuel injector. To a fuel injector hole 152 positioned in an end face of a cone shape 151 portion which is positioned in a tip end portion of a nozzle 140.

A L shape cut-off which is comprised of a wall 154a positioned substantially to a center of the fuel injection hole 152 and a substantially orthogonal to a wall 154b which is cut off with a voluntary depth is formed. At an upstream of a valve seat 153, a fuel swirl element 156 is fixed under pressure by utilizing a nozzle inner wall 150a.

And from a longitudinal passage 157 provided on the fuel swirl element 156 to a swirl passage 158, the fuel is passed through and then the swirl fuel is generated and the fuel is injected from the fuel injection hole 152. In this case, the deflection fuel spray is generated suitably according to the cut-off.

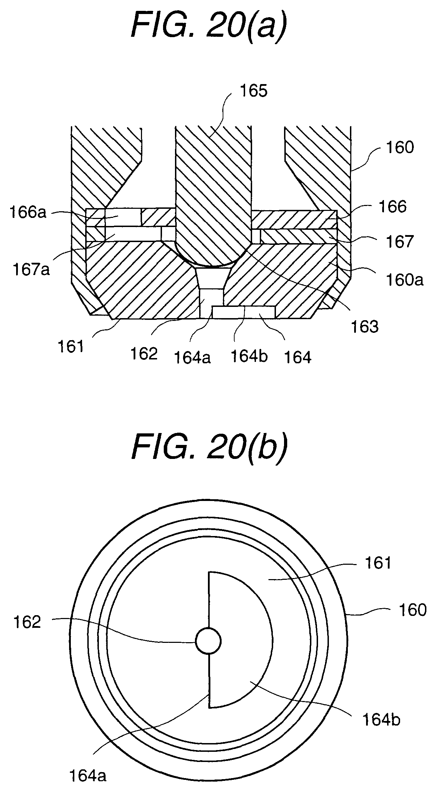

Fig. 20 is a carrying-out embodiment of a structure in which a fuel swirl element is divided into two.

To an enlarged diameter portion 160a of a nozzle 160, a fuel swirl member comprised of a fuel plate 166 having plural vertical passages 166a and a swirl plate 167 having plural swirl passages 167a is inserted, an orifice plate 161 is inserted and fixed by contacting a lower face of the fuel swirl member.

To the orifice plate 161, a fuel injection hole 162 succession to a valve seat face 163 is provided, to this fuel injection hole 162 portion a L shape cut-off which is comprised of a wall 164a positioned substantially to a center of the fuel injection hole 162 and a substantially orthogonal to a wall 164b which is cut off with a voluntary depth is formed.

As stated in above, with a simple structure in which to the tip end portion of the fuel injector the cut-off is provided, then the deflection fuel spray is generated, and since this fuel spray hardly change the deflection angle under the pressurized atmosphere the combustible air-fuel mixture can be generated suitably in the ignition plug direction.

Next, the adoption example to the various type internal combustion engines will be explained.

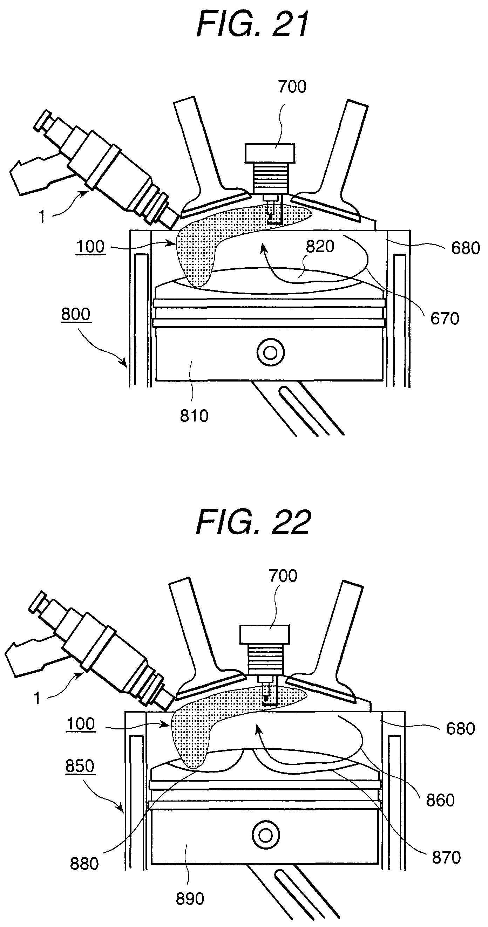

Fig. 21 shows an adoption example to the internal combustion engine having a piston which has a tumble flow preservation cavity.

An internal combustion engine 800 has a piston 810 which has a shallow dish shape cavity 820 and with this piston 810 a tumble 670 is preserved, a fuel adhesion to a side of piston 810 of the deflection fuel spray 100 can be restrained, and also the fuel spray fluidization to the ignition plug direction 700 can be assisted and the combustible air-fuel mixture is introduced suitably to the ignition plug 700. With this, HC discharge amount can be restrained and the stable combustion can be carried out.

Fig. 22 shows an adoption example to an internal combustion engine having a piston which has two cavities for guiding the tumble flow preservation use and the fuel spray. An internal combustion engine 850 has a piston 890 which has two cavities which are a tumble 860 guiding use cavity 870 and a fuel spray guiding use cavity 880.

By preserving the tumble 670, the fuel spray fluidization to the ignition plug 700 direction can be assisted, the fuel spray is guided and the combustible air-fuel mixture can be introduced stable. Accordingly the stable combustion can be carried out.

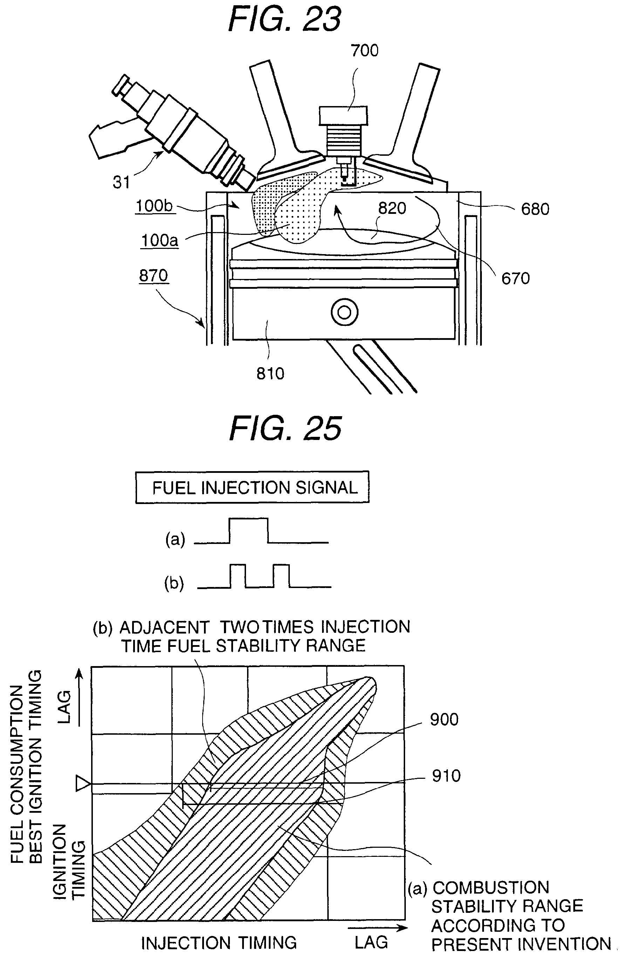

In Fig. 23, to restrain the penetration of the fuel spray during one time injection timing, at least one two times fuel is injected and the fuel is supplied to the internal combustion engine 800, then the combustion is carried out.

Relating to the injection methods, there are various processes, for example, when the internal combustion engine 800 is the high load and the low rotation, the fuel is injected by diving plural times during the intake stroke, and then the penetration of the fuel spray is restrained and further the fuel adhesion to the wall face of the cylinder 680 at the exhaust side and the crest face of the piston 810 can be restrained.

Further, when the internal combustion engine 800 is the low load and the low rotation, the fuel is injected with the plural times during the compression stroke and the fuel spray is guided by the tumble 820 and then the stable combustion according to the stratification combustion can be realized.

Further, the fuel spray embodiment shown in the figure shows the manner during the low load and the low rotation in which the fuel spray 100a injected with the first time is stayed in the surrounding portion of the ignition plug 700, after that before long the fuel spray 100b is caught up, as a result to the surrounding portion of the ignition plug 700, the combustible air-fuel mixture stays during the long period, the stable combustion in the area in which in any internal combustion engine the stratification combustion is difficult can be realized.

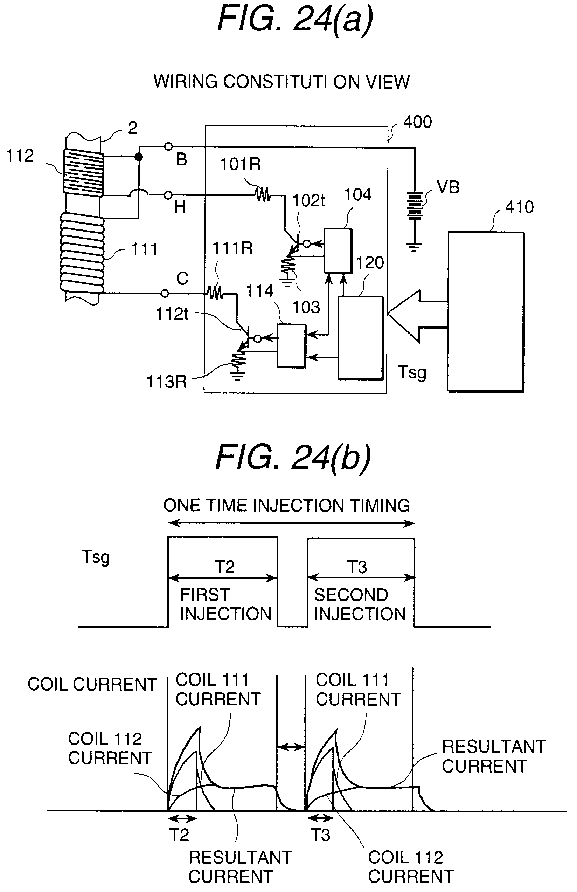

Fig. 24 shows views in which (a) is an explanatory view of a wiring of a drive circuit 400 of the fuel injector 31 used in the above stated tests and (b) is an explanatory of a drive current wave-form.

In Fig. 24(b), in the fuel injector 31, the core 2, the control coil 111 and the hold coil 112 are shown. To a control circuit 400, a battery voltage is supplied from a battery VB and in accordance with a control signal from an engine controller 41, the electric supply control for the control coil 111 and the hold coil 112 is carried out.

To the control circuit 400, a hold coil transistor ON/OFF circuit 104 for carrying out the electric supply control of the hold coil 112 and a control coil transistor ON/OFF circuit 114 for carrying out the electric supply control of the control coil 111 are provided. The respective transistor ON/OFF circuits has the electric current information to the respective coils 111 and 112 which is detected by a hold coil current detection resistor 103R and a control coil current detection resistance 113R.

In accordance with these information and an output of a signal processing circuit 120 in which a fuel injection signal from the engine control 41 is made standard the respective transistor ON/OFF circuits sends an electric supply signal to a hold coil use power transistor 102t and a control coil use power transistor 112t.

When the hold coil use power transistor 102t and the control coil use power transistor 112t present to "ON" state, the voltage of the battery VB is applied to the hold coil 112 and the control coil 111.

Reference numerals 101R and 111R are equivalent circuits of the interior resistances and drive circuits of the hold coil 112 and the control coil 111. The hold coil 112 and the control coil 111 have respectively a different electric characteristic.

The hold coil 112 and the control coil 111 have a different role in the respective stages of the closing valve, the opening valve, the opening valve hold, and the closing valve. The control coil 111, in this embodiment, is a coil which is used exclusively in an opening valve initial condition and the hold coil 112 is a coil which is used in a closing holding condition.

During the opening valve time, namely the control coil 111 of this embodiment and the power transistor 112 of this coil 111 are constituted as following. Firstly, a winding diameter of the control coil 111 is a bold wiring structure having a small resistance rate. Further, since the power transistor 112t is formed with a bipolar, CMOS or bi-CMOS and "ON" resistance during the electric supply is reduced, the equivalent interior resistance 111R of the control coil circuit is reduced.

Further, according to the resistance value of the interior portion resistance 111R which is determined in accordance with this constitution, the winding number is made the vicinity in which a reach magneto-motive force is the maximum.

The electric supply start to the hold coil 112 is unnecessary at the same time of the fuel injection signal input and it is sufficient with the late time thereof. A reach current of a fuel injection rise-up time of the hold coil 112 can be lower from a case in which the electric supply starts at the same time of the fuel injection signal.

As stated in above, since the electric supply to the hold coil 112 is made late, during a fuel injection signal risedown time, namely the current during the closing valve command time can be reduced, and then the closing valve late can be made to the short-circuit.

In this embodiment, to the control 111 and the hold coil 112 in which the characteristic is determined as stated in above, in the first time fuel injection timing, two times current flow shut-off generates.

The fuel injection apparatus constituted as stated in above operates as following. ECU 41 output to the drive circuit 400 a command Tg of plural time injections in accordance with the operation conditions of the internal combustion engine. To the drive circuit 400, for the first injection period T2, from the signal processing circuit 120 the control coil use transistor 112t and the hold coil use transistor 102t are presented to "ON" state.

A total current viewed from the battery is shown with a bold line of a lower side figure of Fig. 24 (b). The transistor 102t is made to present "OFF" state after it lapses the time t2. The transistor 102t is controlled during the first fuel injection period T2 all the time.

According to this, the valve which has opened by a sum of the holding force of the both coils is maintained to form the opening valve state by the magneto-motive force of the control coil 111. Between this the fuel is passed through the fuel swirl element 22 and is injected into the combustion chamber from the fuel injection hole.

When it lapses the first fuel injection time T2, since the electric supply to the transistor 102t is shut off, the coil is demagnetized, and the plunger 4A is pushed back by the return spring member 16 and the valve 30 seats on the valve seat 6 and the fuel injection hole is clogged up.

However, after the slight closing valve interval t4, for the second fuel injection period T3 again from the signal processing 120 the drive circuit 400 presents to "ON" state to the control coil use transistor 112t and the hold coil use transistor 102t through the circuit 114.

A total current viewed from the battery is shown with a bold line of a lower side figure (left) of Fig.

24(b). The transistor 112t is made to present "OFF" state after it lapses the time t2. The transistor 112t is controlled to present "OFF" state during the second fuel injection period T3 all the time.

According to this, the valve which has opened by a sum of the magneto-motive force of the both coils is maintained to form the opening valve state by the holding force of the control coil 111. At this during the fuel is passed through the fuel swirl element 22 and is injected into the combustion chamber from the fuel injection hole.

When it lapses the time T3, since the electric supply to the transistor 102t shut off, the coil is demagnetized, and the plunger 4A is pushed back by the return spring member 16 and the valve 30 seats on the valve seat 6 and the fuel injection hole is clogged up and then the second time fuel injection finishes.

In this embodiment, in regardless the fuel injector drives with the high speed, the fuel injector can be driven with the power supply voltage. Further, after the closing valve since it holds the slight holding current, at this during this one fuel injection timing two times or more than two times the fuel injector is opened and closed and then the electric power consumption can be lessened.

Further, when the battery VB becomes 42V, the drive current is lowered with the part in which the voltage becomes high and when the current is made the same since the winding number of the coil can be reduced, then the fuel injector can be made compact.

Fig. 25 shows the effects according to the two times fuel injection with the combustion stability range. This figure shows the combustion stability range compared with the first embodiment according to the present invention by taking in the horizontal axis the fuel injection timing and in the horizontal axis the ignition timing.

At the ignition timing in which the fuel consumption becomes the best, in comparison with the combustion stability range 900 of the first embodiment which becomes wide extremely compared with the conventional internal combustion engine, since two times fuel injection is carried out, since the combustible air-fuel mixture is stayed in the surrounding portion of the ignition plug ranging over in the long period, the combustible stable range 910 is made wide further.

Accordingly, the stable combustion can be carried out in regardless the engine rotation number and the fuel consumption can be improved further.

According to the present invention, the good ignition performance of the internal combustion engine can be obtained, and the enlargement in the combustion stability range can be improved and also the discharge amount of the unburned gas components in the combustion can be reduced.

**Claims**

1. In an internal combustion engine comprising a cylinder (680), a piston (690) which reciprocates in said cylinder (680), an intake means for taking an air into said cylinder (680), an exhaust means for discharging a combustion gas from said cylinder (680), a fuel injector (1) for injecting directly a fuel into said cylinder (680), a fuel supply means for supplying the fuel into said fuel injector (1), and an ignition means for igniting an air-fuel mixture which is the air taken in said cylinder (680) according to said intake means and the fuel injected into said cylinder (680) using said fuel injector (1), the internal combustion engine (300) **characterized in that** said fuel injector (1) generates a fuel spray (100) which has a cut out portion in which a fuel spray (100) is thin in a peripheral direction in a lateral cross-section crossing a valve axial line of the fuel spray (100) and injects said cut-out portion in which the fuel spray (100) is thin toward a side of said piston (690), and the air taken in from said intake means is flown toward a side of said piston (690) of the fuel spray (100) to a side of said ignition plug (700).

2. An internal combustion engine, according to claim 1, **characterized in that** said fuel injector (1) has a large fuel spray angle in the side of said ignition means and a small fuel spray angle in the side of said piston (690).

3. An internal combustion engine, according to claim 1, **characterized in that** said fuel injector (1) has an orifice plate which forms a fuel injection hole for penetrating said orifice plate in a plate thickness direction, and a fuel spray formation plate for forming said cut-out portion of the fuel spray (100) in an outlet portion of said fuel injector (1).

4. In an internal combustion engine comprising a cylinder (680), a piston which reciprocates in said cylinder (680), an intake means for taking an air into said cylinder (680), an exhaust means for discharging a combustion gas from said cylinder (680), a fuel injector (1) for injecting directly a fuel into said cylinder (680), a fuel supply means for supplying the fuel into said fuel injector (1), and an ignition means for igniting an air-fuel mixture which is the air taken in said cylinder (680) according to said intake means and the fuel injected to said cylinder (680) using to said fuel injector (1), the internal combustion engine (300) **characterized in that** said fuel injector (1) generates a fuel spray (100) which has a cut-out portion in which a fuel spray (100) is thin in a peripheral direction in a lateral cross-section crossing a valve axial line of the fuel spray (100) and injects at least two times said cut-out portion in which the fuel spray (100) is thin toward a side of said piston (690), during one time timing.

5. An internal combustion engine, according to claim 4, **characterized in that** under a stated of a high load and a low rotation time, during an intake stroke the fuel is divided into plural times and injects from said fuel injector (1), and under a state of a low load and a low rotation, during a compression stroke the fuel is divided into plural times and injects from said fuel injector (1).

# FIG. 1

CRANK ANGLE
SENSOR

ACCELLERATION
PEDAL SENSOR

CONTROL UNIT

710

ENGINE
CONTROL

THROTTLE VALVE
CONTROL

INJECTOR DRIVE
CIRCUIT

470

460

INTAKE
AIR

330 340

350 700

410 430 450

310 320 360

530 1

400 420 EXHAUST
440 GAS

520 100 690 670 680

510

500

300

# FIG. 2(a)

# FIG. 2(b)

700

710

1

680

100

670

300

300

A

B

## FIG. 3

## FIG. 4

# FIG. 5

41

42

1

40

43

45

N₂

50

49

44

46
IMAGE
TAKE-IN

47
PULSE
GENERATION

48
DRIVE
CIRCUIT

# FIG. 6

LAG

COMBUSTION STABILITY
RANGE ACCORDING TO
PRESENT INVENTION

FUEL CONSUMPTION BEST
IGNITION TIMING

IGNITION TIMING

800

801

COMBUSTION STABILITY
RANGE ACCORDING TO
PRIOR ART

INJECTION TIMING

LAG

## FIG. 7

HC

PRESENT INVENTION

PRIOR ART

NOx

PRESENT INVENTION

PRIOR ART

WEAK ← TUMBLE STRENGTH → STRONG

# FIG. 8

# FIG. 9

# FIG. 10(a)

# FIG. 10(b)

## FIG. 11(a)

PENETRATION

PENETRATION IS LARGE
AND FUEL DROPLETS
ADHERE TO PISTON
CREST FACE

← VARIABLE RANGE →

SPRAY ANGLE IS WIDE
AND FUEL DROPLETS
ADHERE TO CYLINDER

← VARIABLE RANGE →

SPRAY ANGLE
(DEFLECTION
ANGLE)

$( \alpha + \beta )$

0        2        4        6        8        10

SWIRL NUMBER S

## FIG. 11(b)

H

W

Ls

$\theta s$

d0

# FIG. 12

IN CASE OF L / d0 = 0.7

PENETRATION ( PLUG DIRECTION )

PRESENT INVENTION:
EVEN IF BACK PRESSURE
IS ARISEN, FUEL SPRAY
EXISTS IN PLUG DIRECTION

IN CONVENTIONAL STRAIGHT ORIFICE,
IF BACK PRESSURE IS ARISEN, SPRAY
ANGLE IS TURNED AWAY FROM PLUG
DIRECTION

PRESENT INVENTION:
EVEN IF BACK PRESSURE
IS ARISEN, FUEL SPRAY
ANGLE HARDLY CHANGE

SPRAY ANGLE (DEFLECTION ANGLE )

IN CONVENTIONAL STRAIGHT ORIFICE,
IF BACK PRESSURE IS ARISEN, SPRAY
ANGLE REDUCES

BACK PRESSURE
( ATMOSPHERE PRESSURE )   HIGH

L

d0

DEFLECTION ANGLE
( $\alpha + \beta$ )

# FIG. 13

## FIG. 14(a)

## FIG. 14(b)

# FIG. 15

ORIFICE PLATE 71 PROCESSING PROCESS

| COLD FORGING<br>( CONTOUR FORMING ) | CONFER FIG . 16(a) |

↓

| INJECTION HOLE PRESS FORMING | CONFER FIG . 16(b) |

↓

| SEAT FACE PROCESSING | CONFER FIG . 16(c) |

↓

| HARDENING |

↓

| GRINDING · FINISHING | CONFER FIG . 16(d) |

# FIG. 16(a)

71a

87

86

88

87

# FIG. 16(b)

71b    71a

87    79a

86

79a

δ

# FIG. 16(c)

78a    71a

79a

87

# FIG. 16(d)

SEAT DIAMETER    G

G    Z    71

78    79

87    88    86

G

d0    Z

## FIG. 17(a)

## FIG. 17(c)

## FIG. 17(b)

## FIG. 17(d)

## FIG. 17(e)

# FIG. 18(a)

73
81
73a
72
82
83
69a
93
84
96    95    94

# FIG. 18(b)

69a
96
97
95
97a    97b

## FIG. 19(a)

150a

150

157

156

158

151

153

152

155

154

## FIG. 19(b)

155

154

152

# FIG. 20(a)

# FIG. 20(b)

# FIG. 21

# FIG. 22

# FIG. 23

# FIG. 25

FUEL INJECTION SIGNAL

(a)

(b)

(b) ADJACENT TWO TIMES INJECTION
TIME FUEL STABILITY RANGE

900

910

FUEL CONSUMPTION
BEST IGNITION TIMING

LAG

IGNITION
TIMING

INJECTION TIMING          LAG

(a) COMBUSTION
STABILITY RANGE
ACCORDING TO
PRESENT INVENTION

# FIG. 24(a)

WIRING CONSTITUTI ON VIEW

# FIG. 24(b)

ONE TIME INJECTION TIMING